# EUROPÄISCHE PATENTANMELDUNG

(11) **EP 1 010 560 A1**
(43) Veröffentlichungstag der Anmeldung: **21.06.2000**
(21) Anmeldenummer: 99125011.9
(22) Anmeldetag: 15.12.1999
(51) Int. Cl.: B60J 7/05

(54) **Öffnungsfähiges Fahrzeugdach mit verstellbarem Himmelteil**

(30) Priorität: 18.12.1998 DE 19858676
(71) Anmelder: Webasto Vehicle Systems International GmbH, 82131 Stockdorf (DE); AUDI AG, 85045 Ingolstadt (DE)
(72) Erfinder: Staltmayer, Thomas, 82131 Gauting (DE); Hirschvogel, Engelbert, 86928 Hofgarten (DE); Schwanitz, Günter, 82362 Weilheim (DE); Danzl, Martin, Dipl.-Ing., 82115 Neubeuern (DE); Werner, Robert, Dipl.-Ing., 85135 Stammham (DE); Betz, Siegfried, 85139 Wettstetten (DE); Hilfrich, Erik, Dipl.-Ing., 85049 Ingolstadt (DE)
(74) Vertreter: Wiese, Gerhard

(57) **Zusammenfassung**

Die Erfindung betrifft ein Fahrzeugdach mit einem in seiner Schließstellung eine Dachöffnung (12) in einer festen Dachhaut (10) verschließenden Deckel (14), der zu Lüftungszwecken ausstellbar ist, sowie mit einem verstellbaren Himmelteil (16, 116), das aus seiner Schließstellung, in welcher es die Sicht aus dem Fahrzeuginnenraum (18) auf den Deckel verdeckt, sowohl verschiebbar ist, um die Dachöffnung bzw. die Sicht auf den Deckel freizugeben, als auch mit dem Deckel ausstellbar ist, um die Lüftungsfunktion zu unterstützen. Bei einer ersten erfindungsgemäßen Lösung ist das Himmelteil (16, 116), wenn es sich in einem bestimmten Stellungsbereich relativ zu dem Deckel (14) befindet, derart mit dem Deckel gekoppelt, daß es beim Ausstellen des Deckels von diesem mitgenommen wird. Bei einer alternative Lösung ist daß das Himmelteil (116) derart mit dem Deckel (14) koppelbar, daß das Himmelteil, wenn es sich in einem bestimmten Stellungsbereich relativ zu dem Deckel befindet, beim Ausstellen des Deckels von diesem mitgenommen wird.

## Beschreibung

Die vorliegende Erfindung betrifft ein öffnungsfähiges Fahrzeugdach gemäß dem Oberbegriff von Anspruch 1 bzw. Anspruch 16.

Ein solches gattungsgemäßes Fahrzeugdach ist aus DE 195 13 971 C2 bekannt, wobei der Deckel aus der Schließstellung wahlweise ausgestellt werden kann oder nach hinten unter die feste Dachhaut zurückgeschoben werden kann, um die Dachöffnung freizugeben. Der Deckel und das Himmelteil sind jeweils mit einer separaten Verstellmechanik versehen und werden von zwei getrennten Antrieben, die jeweils einen Elektromotor und drucksteife Antriebskabel umfassen, angetrieben. Ein elektrischer Steuerkreis ist vorgesehen, um die Verschiebe- und Schwenkvorgänge des Himmelteils und des Deckels zu koordinieren, um Kollisionen auszuschließen. Im Rahmen dieses Kollisionsschutzes sind der Deckel und das Himmelteil jedoch unabhängig voneinander verstellbar.

Nachteilig bei diesem Fahrzeugdach ist die aufwendige Gestaltung, insbesondere das Erfordernis von zwei getrennten Antrieben.

Ein einfacheres öffnungsfähiges Fahrzeugdach ist aus DE 43 30 599 C1 bekannt, wobei ein aus seiner Schließstellung wahlweise ausstellbarer oder nach hinten unter die feste Dachhaut verschiebbarer Deckel und ein in Dachlängsrichtung verschiebbares Himmelteil, welches nicht ausstellbar ist, vorgesehen sind. Eine Mitnehmeranordnung sorgt dafür, daß beim Zurückschieben des Deckels das Himmelteil selbsttätig von dem Deckel mitgenommen wird, um die Dachöffnung freizugeben. Bei nicht zurückgeschobenem Deckel, d.h. bei geschlossenem oder ausgestelltem Deckel, wird das Schiebeteil manuell verschoben, um den Lichteinfall durch den transparenten Deckel in das Fahrzeuginnere wunschgemäß zu steuern.

Nachteilig bei diesem Fahrzeugdach ist, daß das Himmelteil nicht ausgestellt werden kann, um die Lüftungsfünktion bei ausgestelltem Deckel zu unterstützen.

Aus DE 25 51 335 C3 ist ein öffnungsfähiges Fahrzeugdach mit einem nichttransparenten, aus seiner Schließstellung wahlweise ausstellbarem oder nach hinten unter die feste Dachhaut schiebbarem Deckel bekannt, an welchem ein Himmelteil befestigt ist, um die Sicht auf den Deckel zu verdecken. Ein solches System ist jedoch nicht für transparente Deckel geeignet.

Es ist Aufgabe der vorliegenden Erfindung, ein Fahrzeugdach mit einem ausstellbaren transparenten Deckel und einem sowohl verschiebbaren als auch ausstellbaren Himmelteil zu schaffen, das dennoch möglichst einfach und kostengünstig ausgebildet ist.

Diese Aufgabe wird durch ein Fahrzeugdach gelöst, wie es in Anspruch 1 bzw. 16 definiert ist.

Bei diesen erfindungsgemäßen Lösungen ist vorteilhaft, daß trotz optimaler Funktionalität des Himmelteils, d.h. Verschiebefünktion zum Freigeben der Dachöffnung bzw. der Sicht auf den Deckel und Ausstellfunktion zum Unterstützen der Lüftungsfunktion, ein einfacher Aufbau des Fahrzeugdaches möglich ist, da auf einen zusätzlichen Antrieb des Himmelteils verzichtet werden kann.

Bei der in Anspruch 1 definierten Lösung ist eine permanente Mitnehmerfunktion für das Himmelteil vorgesehen, d.h. es hängt nur von der relativen Stellung zwischen Himmelteil und Deckel ab, ob das Himmelteil beim Ausstellen des Deckels von diesem mitgenommen wird. Diese Lösung gewährleistet eine besonders einfache Bedienung des Himmelteils.

Bei der in Anspruch 16 definierten Lösung ist dagegen die Mitnehmerfunktion für das Himmelteil nur wahlweise vorgesehen, d.h. der Bediener kann selbst entscheiden, ob das Himmelteil beim Ausstellen des Deckels von diesem mitgenommen werden soll oder nicht. Dies erlaubt eine höhere Flexibilität der Bedienung.

In beiden Fällen wird das Himmelteil vorzugsweise dann beim Ausstellen des Deckels mitgenommen, wenn es sich in oder nahe der Schließstellung befindet.

Gemäß einer bevorzugten Ausgestaltung ist das Himmelteil mit dem Deckel verrastbar, wobei dies vorzugsweise in der Schließstellung des Deckels und des Himmelteils erfolgt und die Verrastung vorzugsweise durch Verschieben des Himmelteils bezüglich des Deckels erfolgt bzw. gelöst wird.

Bei der in Anspruch 1 definierten Lösung mit permanenter Mitnehmerfunktion besteht eine bevorzugte Ausgestaltung darin, daß das Himmelteil bei ausgestelltem Deckel aus ausgestelltem Zustand bzw. in ausgestelltem Zustand verschiebbar ist. Dies hat den Vorteil einer sehr einfachen Bedienung, da sich der Bediener keine Gedanken um die Stellung des Deckels bzw. des Himmelteils machen muß, da das Himmelteil völlig unabhängig von der Deckelstellung verschiebbar ist. Insbesondere kann das Himmelteil direkt aus dem ausgestellten Zustand verschoben werden, ohne daß der Deckel dazu erst in seine Schließstellung abgesenkt werden müßte.

Das Himmelteil wird dabei vorzugsweise für seine Verschiebung in einer Führungseinrichtung geführt, welche ein Führungselement umfaßt, das in der Ausstellrichtung des Himmelteils schwenkbar gelagert ist. Dies stellt eine besonders einfache und zuverlässige Implementierung dar.

Ferner ist der Deckel vorzugsweise so mit dem Führungselement gekoppelt, daß der Deckel das Führungselement bei seiner Ausstellbewegung mitnimmt. Dies sorgt für einen zuverlässigen Betrieb.

Dabei ist vorzugsweise das Schwenklager des Führungselements in Verschieberichtung des Deckels verschiebbar. Dies ermöglicht auf einfache Weise eine Schiebefünktion des Deckels, der dabei über das Führungselement das Himmelteil auch bei der Schiebewegung mitnehmen kann.

Vorzugsweise ist das Führungselement als Kulisse mit Führungsschlitz ausgebildet, in welchen ein an dem Himmelteil ausgebildetes Gegenstück eingreift. In bevorzugter Weiterbildung sind der Deckel und das Führungselement mittels Eingriffs eines Zapfens in eine Ausnehmung gekoppelt.

Gemäß einer alternativen Weiterbildung der Lösung mit permanenter Mitnehmerfunktion ist das Himmelteil in ausgestelltem Zustand nicht verschiebbar, wobei es jedoch in nicht ausgestelltem Zustand unabhängig von der Deckelstellung verschiebbar ist. Dies stellt eine besonders einfache Ausgestaltung dar.

Vorzugsweise sind der Deckel und das Himmelteil in dem bestimmten relativen Stellungsbereich mittels Gleiteingriff gekoppelt, wobei die Gleitrichtung im wesentlichen senkrecht zu der Ausstellrichtung steht. Dies wird vorzugsweise dadurch realisiert, daß an dem Deckel ein Zapfen ausgebildet ist, der in eine an dem Himmelteil ausgebildete Kulisse eingreift.

Gemäß einer bevorzugten Ausführungsform der Lösung mit wahlweiser Mitnehmerfunktion erfolgt die Kopplung zwischen Himmelteil und Deckel über einen Verschluß, der bei Betätigung abwechselnd öffnet bzw. schließt ("Klick-Klack-Verschluß").

Bei einer alternativen Ausführungsform dieser Lösung erfolgt die Koppelung dadurch, daß Deckel und Himmelteil mittels eines Betätigungselements in Gleiteingriff gebracht werden, wobei die Gleitrichtung im wesentlichen senkrecht zu der Ausstellrichtung steht.

Dabei ist das Himmelteil vorzugsweise so gelagert, daß es sich bei Entkopplung mit dem in ausgestellter Position befindlichem Deckel gedämpft absenkt, um übermäßige Geräuschentwicklung zu vermeiden.

Das Betätigungselement ist vorzugsweise als Hebel mit Gestänge ausgebildet.

Weitere vorteilhafte Weiterbildungen ergeben sich aus den Unteransprüche.

Im folgenden sind vier Ausführungsformen der Erfindung anhand der beiliegenden Zeichnungen näher erläutert. Dabei zeigt:
- Fign. 1 bis 3: eine schematische Seitenansicht einer ersten Ausführungsform der Erfindung in unterschiedlichen Stellungen,
- Fig. 4: eineExplosionsdarstellung der Mitnehmermechanik des Fahrzeugdaches aus Fign. 1 bis 3,
- Fign. 5 bis 8: unterschiedliche perspektivische Ansichten der in Fig. 4 gezeigten Mitnehmermechanik im montierten Zustand,
- Fign. 9 bis 11: schematische Seitenansichten einer zweiten Ausführungsform der Erfindung in unterschiedlichen Stellungen,
- Fign. 12 bis 14: schematische Seitenansichten einer dritten Ausführungsform der Erfindung in unterschiedlichen Stellungen,
- Fign. 15 bis 17: schematische Seitenansichten einer vierten Ausführungsform der Erfindung in unterschiedlichen Stellungen
- Fign. 18 und 19: schematische Seitenansichten einer fünften Ausführungsform der Erfindung.

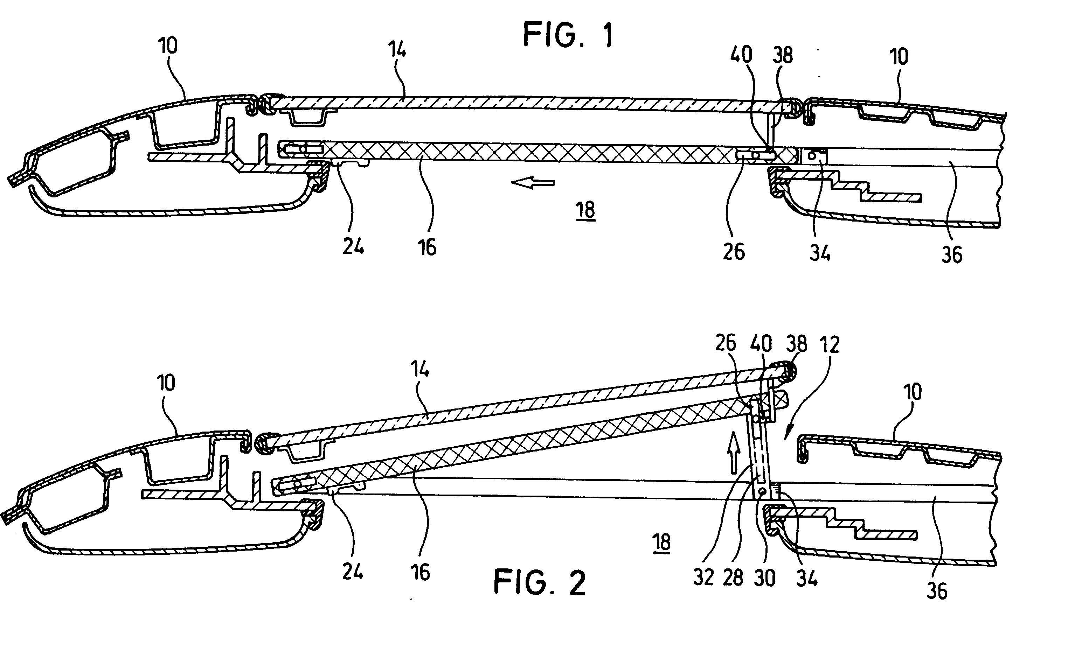

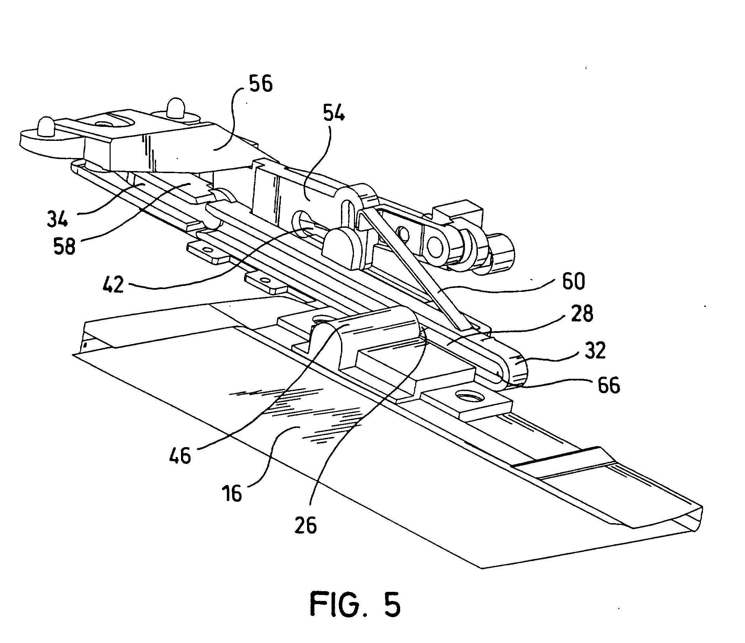

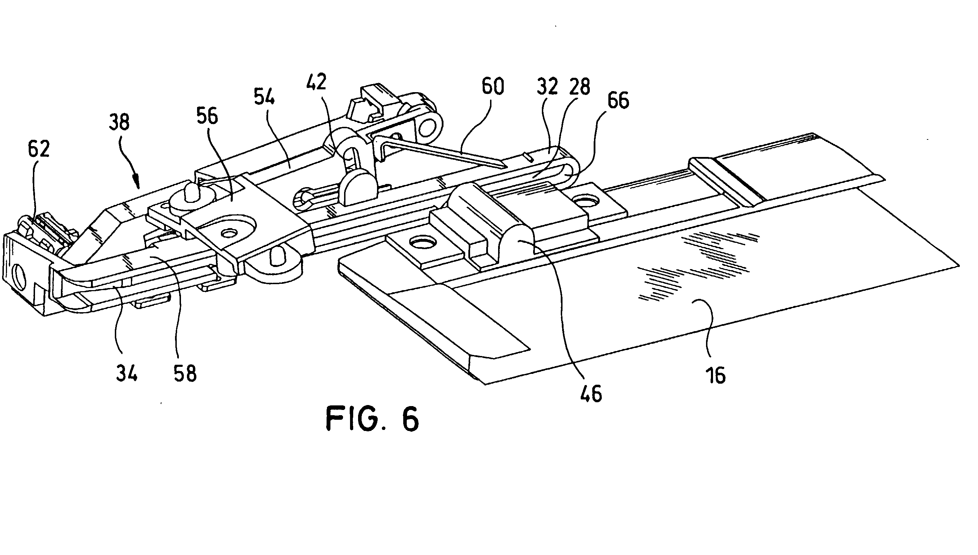

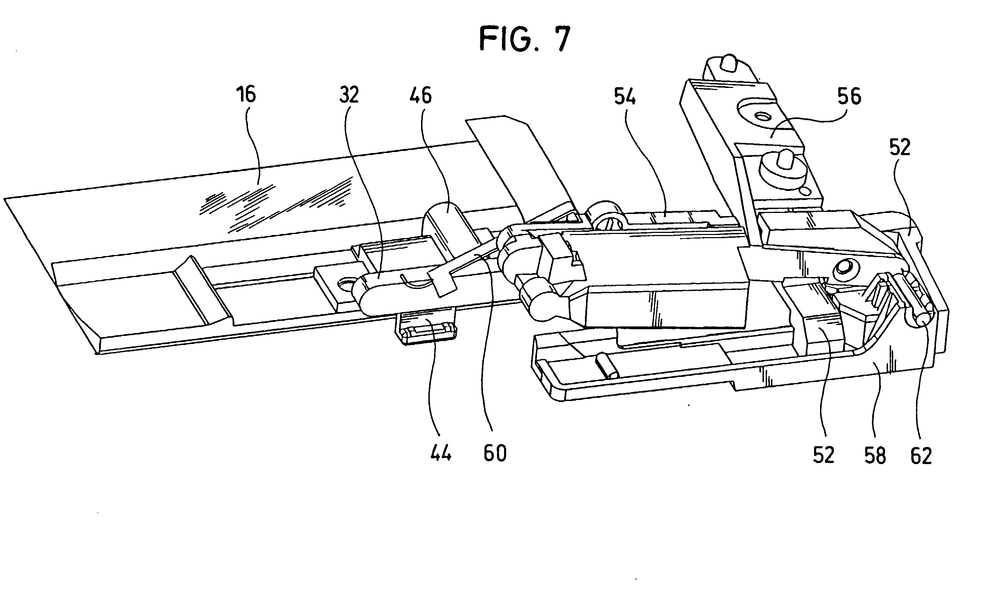

In den Fign. 1 bis 8 ist eine erste Ausführungsform mit permanenter Mitnehmerfunktion dargestellt. In einer festen Dachhaut 10 ist eine Dachöffnung 12 ausgebildet, die von einem transparenten Deckel 14 in der in Fig. 1 gezeigten Schließstellung verschlossen wird. Unterhalb des Deckels 14 ist ein Himmelteil 16 angeordnet, welches in seiner in Fig. 1 gezeigten Schließstellung den transparenten Deckel von unten vollständig abdeckt, um übermäßigen Lichteinfall in den Fahrzeuginnenraum 18 zu verhindern.

An der Unterseite im vorderen Bereich des Himmelteils 16 ist eine Griffmulde 24 ausgebildet, mittels welcher der Fahrer bzw. Beifahrer das Himmelteil 16 bezüglich des Deckels 14 verschieben kann. Am hinteren Ende des Himmelteils 16 ist ein Gleitschuh 26 angebracht, welcher in einen Kulissenschlitz 28 gleitend eingreift, der an einem mit seinem hinteren Ende in einem Lagerpunkt 30 nach oben bzw. unten schwenkbar gelagerten Führungselement 32 ausgebildet ist. Der Lagerpunkt 30 ist in Dachlängsrichtung in einer dachfesten Führungsschiene 36 verschiebbar. An das hintere Ende des Führungselements 32 mit dem Lagerpunkt 30 schließt sich ein zusammen mit dem Lagerpunkt 30 in der dachfesten Führungsschiene 36 verschiebbares Führungselement 34 an.

Am hinteren Ende des Deckels 14 ist ein Mitnehmerelement 38 angebracht, welches mit einem Zapfen 40 in eine in dem schwenkbaren Führungselement 32 ausgebildete Ausnehmung 42 eingreift. Die Ausnehmung 42 ist so ausgebildet, daß der Zapfen im wesentlichen in der Verschieberichtung des Himmelteils 16 und der Ausstellrichtung von Deckel 14 und Himmelteil 16 verschiebbar geführt ist. Wenn der Deckel 14 mittels eines üblichen Antriebs, z.B. einer von drucksteifen Antriebskabeln über einen Elektromotor und ein Ritzel angetriebene Ausstellmechanik ausgestellt wird, bewegt sich die Deckelhinterkante nach oben und hebt dabei über das Mitnehmerelement 38 das schwenkbare Führungselement 32 mit seinem vorderen, sich in die Dachöffnung 12 hineinerstreckenden Ende nach oben an. Über den Eingriff des Gleitschuhs 40 in den Kulissenschlitz 28 des schwenkbaren Führungselements 32 wird dabei auch das hintere Ende des Himmelteils 16 angehoben, so daß die Ausstellbewegung des Deckels 14 eine im wesentliche parallele Mitnahme des Himmelteils 16 bewirkt, wodurch dieses ebenfalls ausgestellt wird (siehe Fig. 2). Durch die Mitnahme des Himmelteils 16 in eine Ausstellposition wird am hinteren Ende der Dachöffnung 12 eine Lüftungsöffnung geschaffen, um den Fahrzeuginnenraum 18 zu entlüften.

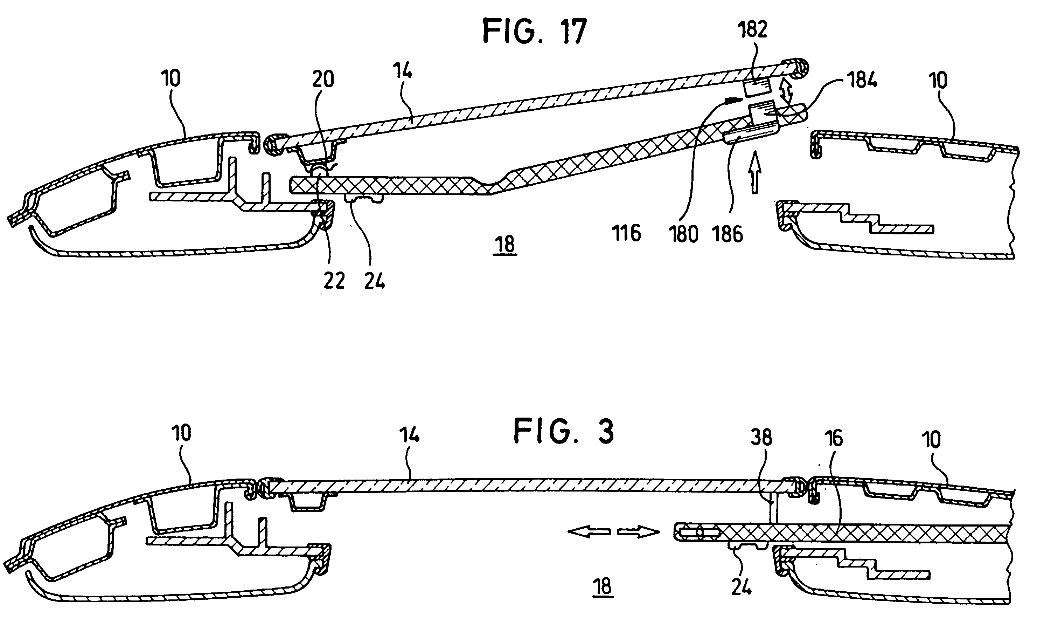

Falls der Fahrer bzw. Beifahrer einen Lichteinfall durch den transparenten Deckel 14 wünscht, kann er mittels der Griffmulde 24 das Himmelteil 16 manuell nach hinten schieben, um die Dachöffnung 12 und damit die Sicht auf bzw. durch den Deckel 14 freizugeben (siehe Fig. 3). Sowohl in der in Fig. 1 gezeigten Schließstellung des Deckels 14 als auch in der in Fig. 2 dargestellten Lüftungsposition des Deckels 14 ist dies ohne weiteres möglich, indem der Gleitschuh 26 zunächst in dem Kulissenschlitz 28 des schwenkbaren Führungselements 32 und dann in dem Führungselement 34 und schließlich der dachfesten Führungsschiene 36 nach hinten gleitet. Die Führungselemente 32 und 34 bleiben dabei ortsfest. Wird die Verschiebung des Himmelteils 16 aus der in Fig. 2 dargestellten ausgestellten Position begonnen, wird das Himmelteil 16 dabei zunächst aufgrund der nach oben verschwenkten Stellung des schwenkbaren Führungselements 32 mit seiner Hinterkante abgesenkt, so daß das Himmelteil 16 schließlich unter die feste Dachhaut 10 nach hinten geschoben werden kann. Der Deckel 14 braucht dazu nicht abgesenkt werden. Das nach hinten verschobene Himmelteil 16 kann schließlich auch bei ausgestelltem Deckel 14 ohne weiteres auf umgekehrtem Weg wieder unter den Deckel 14 geschoben werden, wobei das verschwenkte Führungselement 32 bei ausgestelltem Deckel 14 für die entsprechende Ausstellbewegung des Himmelteils 16 sorgt.

Die Verschiebbarkeit der Führungselemente 32 und 34 erlaubt ein Absenken des Deckels 14 aus der Schließstellung mit seiner Hinterkante und anschließendes Verschieben nach hinten unter die feste Dachhaut 10, wobei die Führungselemente 32 und 34 ebenfalls nach hinten geschoben werden und dabei das Himmelteil 16 nach hinten mitnehmen.

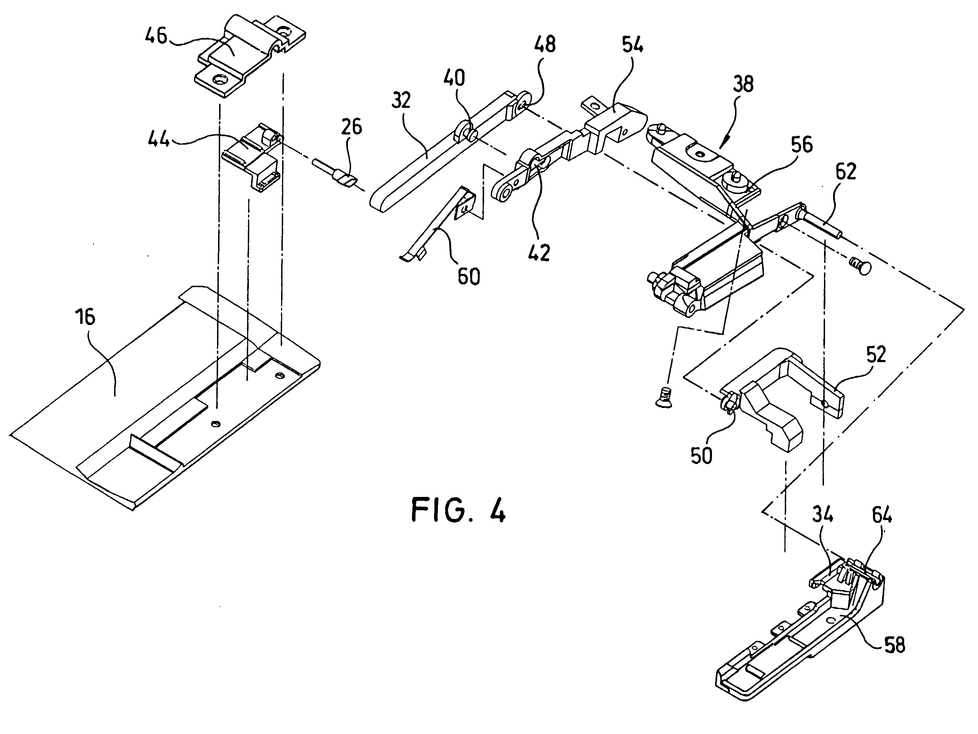

In den Fign. 4 bis 8 ist die Mitnahmemechanik für das Ausstellen des Himmelteils 16 detaillierter gezeigt. Dabei ist der Gleitschuh 26 mittels zweier Befestigungselemente 44 bzw. 46 an dem Himmelteil 16 angeschraubt. Das schwenkbare Führungselement 32 ist hebelartig ausgebildet, wobei das Schwenklager 30 dadurch gebildet wird, daß das Führungselement 32 an seinem hinteren Ende eine Ausnehmung 48 aufweist, welche in einen entsprechenden Zapfen 50 eines in Dachlängsrichtung verschiebbar gelagerten Befestigungselements 52 eingehängt wird. Das Mitnehmerelement 38 wird von einem Element 54, welches die kulissenförmige Öffnung 42 für den Zapfen 40 des schwenkbaren Führungselements 32 aufweist, und einem damit fest verbundenen Element 56 gebildet, welches mit der Unterseite des Deckels 14 verbunden ist. Das Befestigungselement 52, an welchem das schwenkbare Führungselement 32 gelagert ist, ist mit einem weiteren in Dachlängsrichtung verschiebbar gelagerten Element 58 verbunden, an welchem das Führungselement 34 ausgebildet ist. An dem Element 54 ist eine Feder 60 angebracht, welche das vordere freie Ende des schwenkbaren Führungselements 32 nach unten vorspannt, um Klappergeräusche und Ähnliches zu verhindern.

Das deckelfeste Element 56 weist einen Zapfen 62 auf, der bei nicht ausgestellten Deckel in eine Ausnehmung 64 des verschiebbaren Elements 58 abgelegt ist und dadurch für einen Kraftschluß in Dachlängsrichtung sorgt. Beim Zurückschieben des Deckel 14 wird über das Element 58 und das Führungselement 32 durch Anlage des Schuhs 26 an dem vorderen Ende 66 des Kulissenschlitzes 28 das Himmelteil 16 nach hinten mitgenommen.

Statt der mehrteiligen Ausgestaltung können beispielsweise auch die Elemente 38 und 54 und die Elemente 52 und 58 einteilig ausgebildet sein.

Der Deckel 14 kann auch als reiner Hebedeckel ausgebildet sein. In diesem Fall ist das schwenkbare Führungselement 32 dachfest angelenkt.

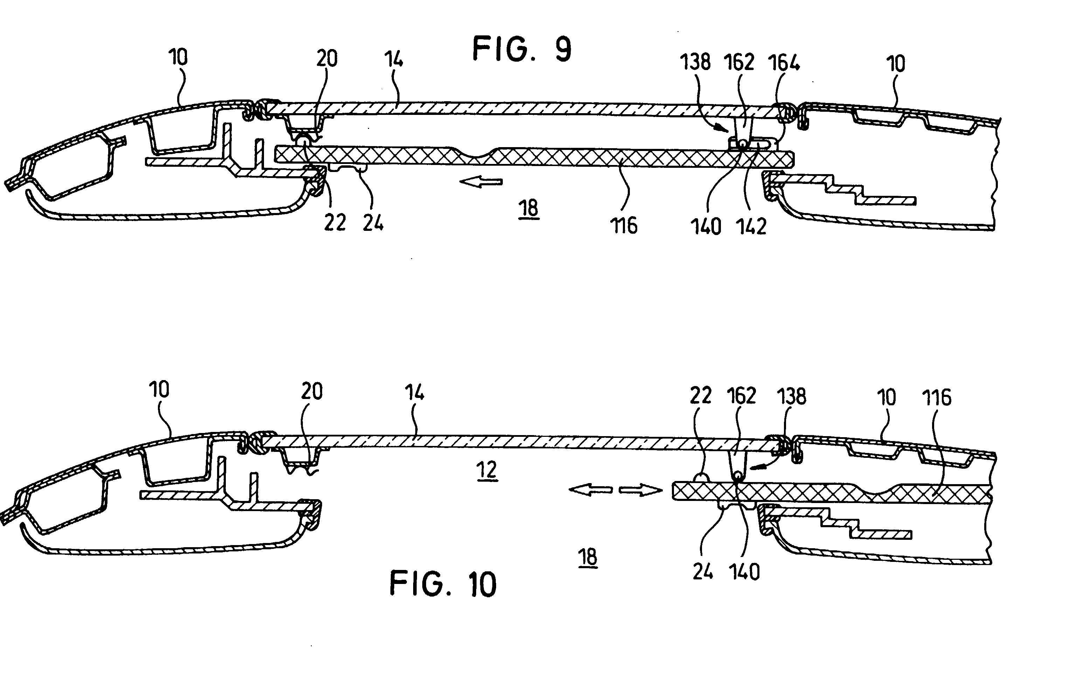

Die in den Fign. 9 bis 11 dargestellte zweite Ausführungsform mit permanenter Mitnehmerfunktion unterscheidet sich von der in den Fign. 1 bis 8 dargestellten ersten Ausführungsform vor allem dadurch, daß kein schwenkbares Führungselement vorgesehen ist, so daß bei ausgestelltem Deckel 14 und gleichzeitig ausgestelltem Himmelteil 116 keine Verschiebung des Himmelteils 116 nach hinten möglich ist.

Ein Mitnehmerelement 138 ist an der Unterseite im hinteren Bereich des Deckels 14 angebracht und umfaßt einen Arm 162, der an seinem unteren Ende einen Zapfen 140 trägt. Wenn sich der Deckel 14 und das Himmelteil 116 in oder nahe ihrer in Fig. 9 gezeigten Schließstellung befinden, greift der Zapfen 140 des Mitnehmerelements 138 in einen Kulissenschlitz 142 einer auf der Oberseite im hinteren Bereich des Himmelteils 116 angebrachten Kulisse 164 gleitend ein, wobei sich der Kulissenschlitz 142 im wesentlichen in Verschieberichtung des Himmelteils 116 erstreckt.

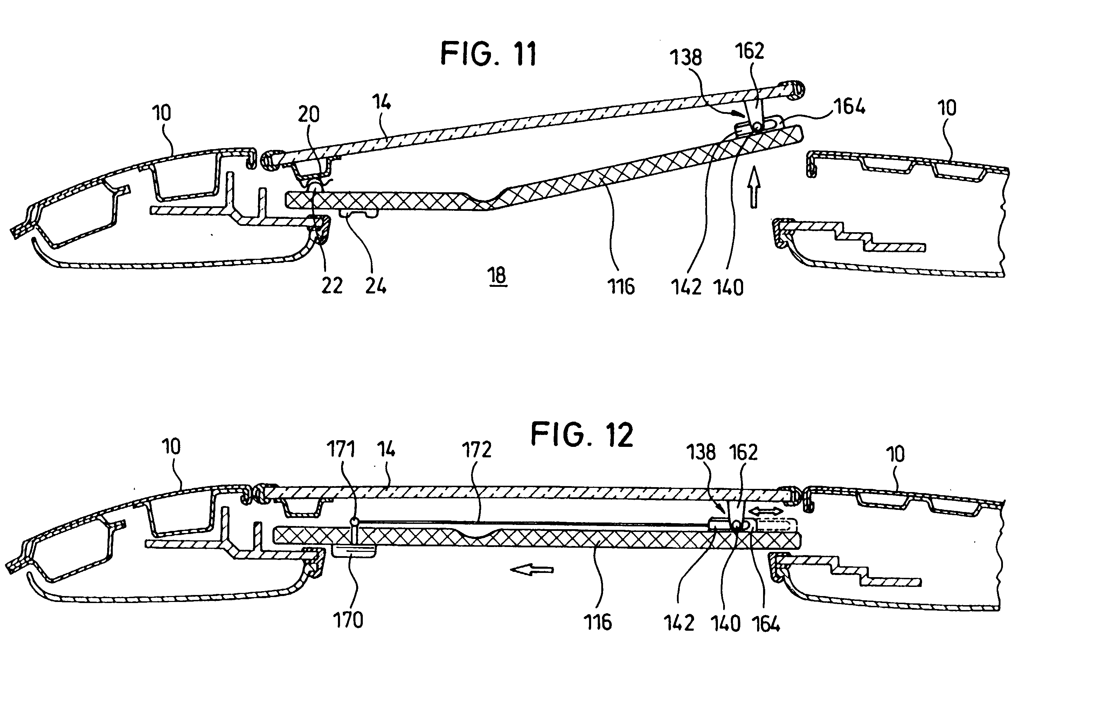

Ferner ist am vorderen Ende des Deckels 14 ist an seiner Unterseite eine Rastaufnahme 20 ausgebildet, in welche in der in den Fign. 9 und 11 gezeigten Stellung eine am vorderen Ende an der Oberseite des Himmelteils 116 ausgebildete Rastnase 22 eingreift, so daß der Deckel 14 und das Himmelteil 116 miteinander verrastet sind. Die Aufnahme 20 bzw. die Nase 22 sind so elastisch ausgebildet, daß die Verrastung durch paralleles Verschieben des Himmelteils 116 bezüglich des Deckels 14 hergestellt bzw. gelöst werden kann.

Wenn der Deckel 14 ausgehend von der in Fig. 9 dargestellten Schließstellung mit seinem hinteren Ende ausgestellt wird, nimmt er über den Eingriff des Zapfens 140 des Mitnehmerelements 138 in die Kulisse 164 an dem Himmelteil 116 das Himmelteil 116 an dessen hinterem Ende mit, so daß das Himmelteil 116 ebenfalls in eine ausgestellte Position gebracht wird. Gemäß Fig. 11 kann das Himmelteil 116 so ausgebildet sein, daß bei diesem Mitnehmen in eine Ausstellposition der hintere Teil des Himmelteils 116 bezüglich des vorderen Teils nach oben gebogen wird.

In dieser Stellung kann das Himmelteil 116 nicht nach hinten geschoben werden, da das Ausstellen des Deckels auf nicht näher beschriebene Weise eine Arretierung zwischen Deckel 14 und Himmelteil 116 bewirkt.

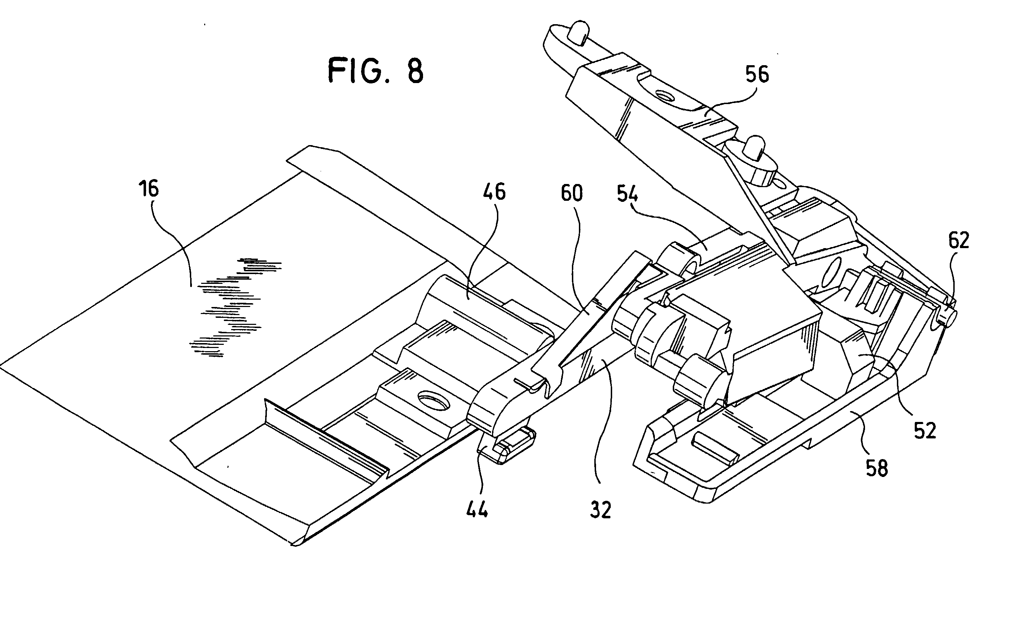

Falls dennoch der Deckel 14 ausgehend von der in Fig. 11 gezeigten Ausstellposition freigegeben werden soll, muß der Deckel 14 mit dem Himmelteil 116 zunächst wieder in die in Fig. 8 gezeigte Schließstellung abgesenkt werden, aus welcher dann schließlich das Himmelteil 116 mittels der Griffinulde 24 nach hinten geschoben werden kann, wobei zunächst noch der Zapfen 140 in den Kulissenschlitz 142 eingreift, so daß das Himmelteil 116 zunächst noch bezüglich des Deckels 14 geführt wird. Gemäß Fig. 10 kann das Himmelteil 116 nahezu vollständig unter die feste Dachhaut 10 nach hinten geschoben werden, um den Deckel 14 freizulegen.

Falls der Deckel 14 ausgehend von seiner Schließstellung ausgestellt wird, während das Himmelteil 116 so weit nach hinten verschoben ist, daß der Zapfen 140 des Mitnehmerelements 138 nicht in den Kulissenschlitz 142 an dem Himmelteil eingreift, erfolgt keine Mitnahme des Himmelteils 116 in eine Ausstellposition. In diesem Fall bleibt das Himmelteil 116 auch bei ausgestelltem Deckel 14 unabhängig von dem Deckel 14 verschiebbar. In einem solchen Fall muß darauf geachtet werden, daß der Deckel 14 nur dann abgesenkt wird, wenn sich das Himmelteil 116 nicht so weit vorne befindet, daß der Zapfen 140 sich von oben auf die Kulisse 164 bewegen würde, oder die Kulisse 164 muß entsprechend ausgebildet sein, um einen Eintritt des Zapfens 140 von oben zu erlauben.

Die in den Fign. 12 bis 14 dargestellte dritte Ausführungsform ist ähnlich zu der in den Fign. 9 bis 11 dargestellten zweiten Ausführungsform, unterscheidet sich von dieser jedoch im wesentlichen dadurch, daß mittels eines Betätigungselements die Mitnehmerfunktion für das Himmelteil 116 mittels eines Betätigungselements wahlweise aufhebbar ist.

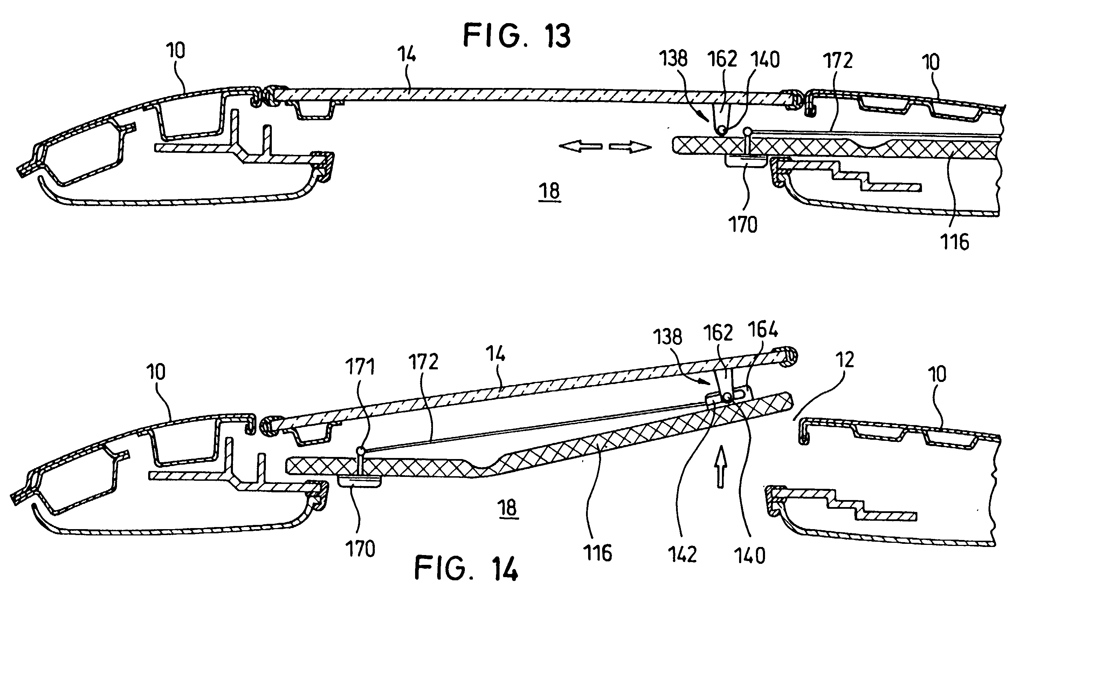

Zu diesem Zweck ist die Kulisse 164 nicht fest an dem Himmelteil 116 angebracht, sondern sie ist mittels eines Betätigungselements bezüglich des Himmelteils 116 in Verschieberichtung des Himmelteils 116 verschiebbar. Das dafür erforderliche Betätigungselement umfaßt einen im Bereich der Griffmulde 24 angebrachten Wählhebel 170, der mit einer den Himmel 116 durchdringenden Welle mit einem Hebel 171 (oder einem Exzenter) verbunden ist. Am Hebel 171 ist das vordere Ende eines Gestänges 172 angelenkt, dessen hinteres Ende an der Kulisse 164 angelenkt ist. Bei einer Verdrehung des Wählhebels 170 wird über den Hebel 171 und das Gestänge 172 die Kulisse 164 an der Oberseite des Himmels 116 geführt verschoben. Je nach Stellung des Wählhebels 170 wird dabei die Kulisse 164 bezüglich des Himmelteils 116 nach vorne bzw. nach hinten geschoben, wobei der Verschiebeweg so gewählt ist, daß bei der in Fig. 12 gezeigten Schließstellung des Deckels 14 und des Himmelteils 116 in der einen Position der Zapfen 140 des Mitnehmerelements 138 in den Kulissenschlitz 142 der Kulisse 164 eingreift, wodurch der Deckel 14 und das Himmelteil 116 wie bei der zweiten Ausführungsform gemäß den Fign. 9 bis 11 für eine Mitnahme bei der Ausstellbewegung des Deckels 14 gekoppelt sind, während in der zweiten Stellung (in Fig. 12 gestrichelt dargestellt) der Zapfen 140 nicht in den Kulissenschlitz 142 eingreift, so daß in diesem Fall selbst dann, wenn sich sowohl der Deckel 14 als auch das Himmelteil 116 in der Schließstellung befinden, keine Mitnahme des Himmelteils 116 beim Ausstellen des Deckels 14 stattfindet. Gemäß Fig. 14 kann der Wählhebel 170 jedoch auch dann betätigt werden, wenn sich der Deckel 14 in einer ausgestellten Position befindet und das Himmelteil 116 beim Ausstellen mitgenommen wurde. In diesem Fall wird das Ende des Himmelteils 116 dadurch freigegeben, daß der Zapfen 140 außer Eingriff mit dem Kulissenschlitz 142 gebracht wird. Um ein zu rasches selbsttätiges Absenken des hinteren Endes des Himmelteils 116 zu verhindern, ist der hintere Bereich des Himmelteils 116 mit einer entsprechenden nicht näher dargestellten Mechanik verbunden, die ein gedämpftes selbsttätiges Absenken des Himmelteils 116 bei Betätigung des Wählhebels 170 und entsprechender Entkoppelung von dem Deckel 14 bewirkt.

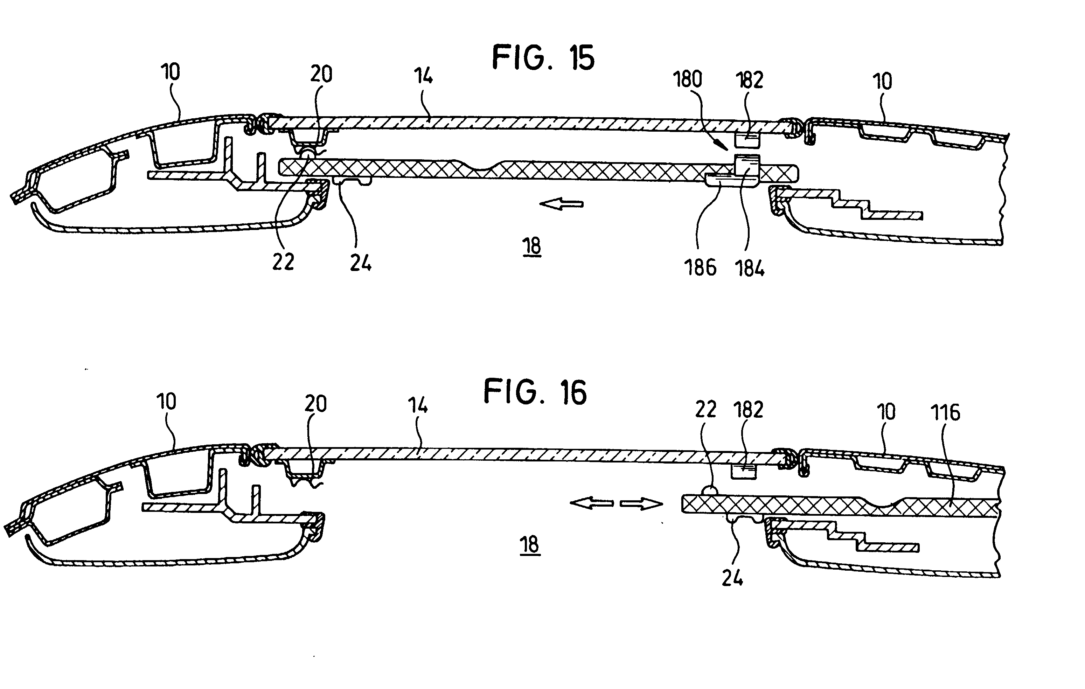

Bei der in den Fign. 15 bis 17 dargestellten vierten Ausführungsform handelt es sich wie bei der in den Fign. 12 bis 14 dargestellten dritten Ausführungsform um ein Fahrzeugdach mit wahlweiser Mitnehmerfunktion, wobei sich die vierte Ausführungsform jedoch von der dritten Ausführungsform dadurch unterscheidet, daß die Koppelung für die Mitnahmefunktion nicht über einen wahlweisen Gleiteingriff zwischen Deckel und Himmelteil erfolgt, sondern über einen an dem hinteren Ende des Deckels 14 bzw. des Himmelteils 116 ausgebildeten Verschluß 180 erfolgt, welcher ein an der Unterseite des Deckels 14 angebrachtes Element 182 sowie ein mit dem Element 182 zusammenwirkendes, an der Oberseite des Himmelteils 116 ausgebildeten Gegenstücks 184 sowie einen Betätigungshebel 186 umfaßt. Der Verschluß 180, ist so ausgebildet, daß er bei Druckbetätigung abwechselnd öffnet bzw. schließt ("Klick-Klack-Verschluß").

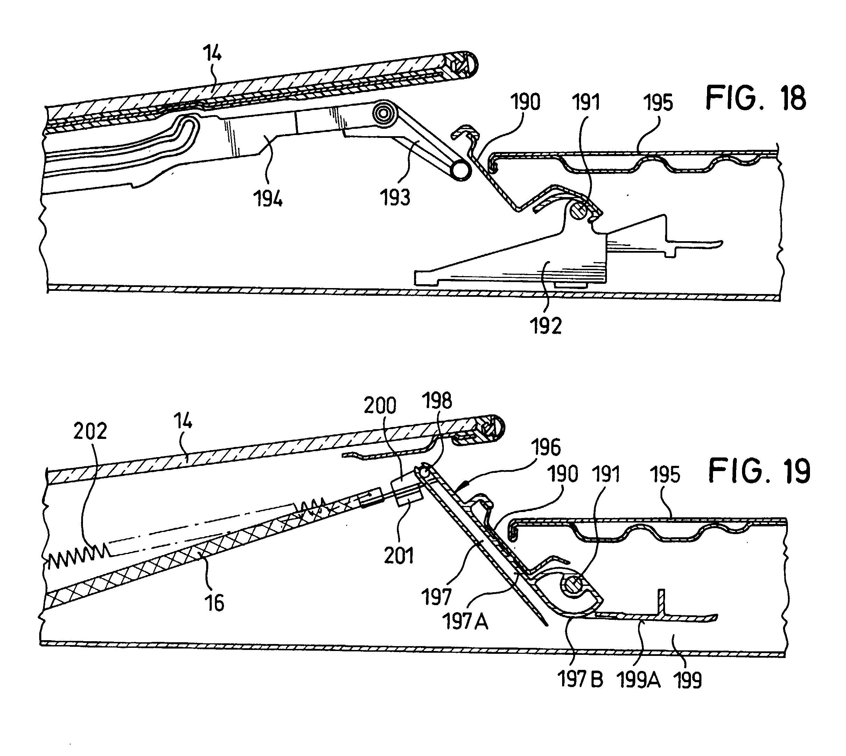

Ausgehend von der in Fig. 15 dargestellten Schließstellung wird bei arretiertem Verschluß 180 beim Ausstellen des Deckels 14 das Himmelteil 116 mit seinem hinteren Ende in eine Ausstellposition mitgenommen (siehe Fig. 17). Wenn in einer solchen ausgestellten Position der Verschluß 182 durch Betätigung des Betätigungshebels 186 geöffnet wird, bewegt sich das hintere Ende des Mitnehmerelements selbsttätig nach unten, wobei vorzugsweise eine nicht dargestellte Dämpfungsmechanik vorgesehen ist, um unnötige Geräuschentwicklung zu vermeiden. Anschließend kann das Himmelteil 116 nach hinten unter die feste Dachhaut 10 verschoben werden, um den Deckel 14 freizugeben. Wenn der Verschluß 180 schon in der in Fig. 15 dargestellten Schließstellung geöffnet ist, wird das Himmelteil 116 beim Ausstellen des Deckels 14 erst gar nicht mitgenommen.

Bei geschlossenem Deckel 14 kann das Himmelteil 116 bei geöffnetem Verschluß 180 ausgehend von der in Fig. 15 dargestellten Schließstellung nach hinten unter die feste Dachhaut 10 geschoben werden, siehe Fig. 16.

Schließlich kann bei ausgestelltem Deckel 14 und nicht mitgenommem Himmelteil 116 das Himmelteil 116 manuell in eine Ausstellposition gebracht werden, indem das Himmelteil 116 zunächst ganz nach vorn in die Schließstellung geschoben wird, in welcher es an seinem vorderen Ende mit dem Deckel 14 verrastet, und anschließend kann das hintere Ende des Himmelteils 116 manuell an den ausgestellten Deckel 14 herangebracht und der Verschluß 180 mittels des Betätigungshebels 186 arretiert werden.

Bei der in den Fign. 18 und 19 dargestellten fünften Ausführungsform ist eine hintere Wasserrinne 190 schwenkbar mit einem Bolzen 191 an einem Gleitelemente 192 gelagert, das in nicht dargestellten Führungsschienen längs verschiebbar ist. Nahe an ihrer Vorderkante ist die hintere Wasserrinne 190 mittels eines Hebels 193 an einer Kulisse 194 angelenkt, die am Deckel 14 befestigt ist. Durch den Hebel 193 wird die Wasserrinne 190 mit ihrem vorderen Ende über die hintere feste Dachhaut 195 angehoben, wenn sich der Deckel 14 in seiner ausgestellten Position befindet.

Wie in Fig. 19 dargestellt, ist die Wasserrinne 190 an ihrer Unterseite mit Führungsmitteln verbunden. Die Führungsmittel 196 weisen einen Führungsschlitz 197 auf, der zur Führung eines Führungsbolzen 198 dient. Der Führungsbolzen 198 ist an einer Kupplungseinrichtung 200 angeordnet, welche am Schiebe-Hebe-Himmel 16 senkrecht zur Zeichenebene verschiebbar gelagert ist. Die obere Führungsfläche 197A des Führungsschlitzes 197 ist in ihrem hinteren Bereich 197B bogenförmig ausgeführt, so daß sie bei einer Schwenkbewegung der Wasserrinne 190 stets in engem Kontakt zur benachbarten oberen Führungsfläche 199A einer hinteren horizontalen Führung 199 bleibt. Die hintere horizontale Führung 199 dient zur Führung eines hinteren Schlittens 201 des Himmel 16, wenn dieser nach hinten bewegt wird.

Der hintere horizontale Führungskanal 199 hat an seinem Beginn an einer Seitenwand eine nicht dargestellte keilförmige Führungsfläche, die senkrecht zur Zeichenebene dafür sorgt, daß der Führungsbolzen 198 beim Absenken des Himmels 16 außer Eingriff mit dem Führungsschlitz 197 und gleichzeitig der Schlitten 201 in Eingriff mit dem Führungskanal 199 gebracht wird. Dieses Absenken des Himmels 116 kann im ausgestellten Zustand des Deckels 14 erfolgen.

An der Oberseite des Himmels 16 ist ein elastisch verformbares Element 202 nach Art einer Zugfeder mit einem Ende nahe des hinteren Teils des Himmels 16, der nach oben ausstellbar ist, befestigt, während das andere Ende des flexiblen Elements 202, welches nicht dargestellt ist, an der Oberseite eines vorderen Abschnitts des Himmels 16 befestigt ist, der nicht ausstellbar ist. Die vordere Befestigung liegt beispielsweise auf Höhe des Griffs 24 in der Figur 17. Das flexible Element 202 zieht das hintere Ende des Himmels 16 nach vorne und hält dadurch den Führungsbolzen 198 in unterstützendem Eingriff mit der unteren Führungsfläche des Führungsschlitzes 197, so daß das hintere Ende des Himmels 16 nicht aufgrund seines Eigengewichts im Führungsschlitz 197 nach unten gleitet.

Bei allen geschilderten Ausführungsformen kann der Deckel 14 grundsätzlich als HebeDeckel oder als Schiebe-Hebe-Deckel ausgebildet sein, wobei in letzterem Fall die Mitnehmer- bzw. Koppelungsmechanik zwischen Deckel und Himmelteil für eine entsprechende relative Höhenverschiebung beim Absenken der Deckelhinterkante unter die feste Dachhaut ausgebildet sein.

## Patentansprüche

1. Fahrzeugdach mit einem in seiner Schließstellung eine Dachöffnung (12) in einer festen Dachhaut (10) verschließenden Deckel (14), der zu Lüftungszwecken ausstellbar ist, sowie mit einem verstellbaren Himmelteil (16, 116), das aus seiner Schließstellung, in welcher es die Sicht aus dem Fahrzeuginnenraum (18) auf den Deckel bzw. die Dachöffnung verdeckt, sowohl verschiebbar ist, um die Dachöffnung bzw. die Sicht auf den Deckel freizugeben, als auch mit dem Deckel ausstellbar ist, um die Lüftungsfünktion zu unterstützen, **dadurch gekennzeichnet**, daß das Himmelteil (16, 116), wenn es sich in einem bestimmten Stellungsbereich relativ zu dem Deckel (14) befindet, derart mit dem Deckel gekoppelt ist, daß es beim Ausstellen des Deckels von diesem mitgenommen wird.

2. Fahrzeugdach nach Anspruch 1, dadurch gekennzeichnet, daß das Himmelteil (16, 116) beim Ausstellen des Deckels (14) mitgenommen wird, wenn es sich in oder nahe der Schließstellung befindet

3. Fahrzeugdach nach Anspruch 1 oder 2, dadurch gekennzeichnet, daß das Himmelteil (16) bei ausgestelltem Deckel (14) aus ausgestelltem Zustand bzw. in ausgestellten Zustand verschiebbar ist.

4. Fahrzeugdach nach Anspruch 3, dadurch gekennzeichnet, daß das Himmelteil (16) für die Verschiebung in einer Führungseinrichtung geführt ist, welche ein Führungselement (32) umfaßt, das in der Ausstellrichtung des Himmelteils schwenkbar gelagert ist.

5. Fahrzeugdach nach Anspruch 4, dadurch gekennzeichnet, daß der Deckel (14) so mit dem Führungselement (32) gekoppelt ist, daß der Deckel das Führungselement bei seiner Ausstellbewegung mitnimmt.

6. Fahrzeugdach nach Anspruch 5, dadurch gekennzeichnet, daß der Deckel (14) und das Führungselement (32) mittels Eingriffs eines Zapfens (40) in eine Ausnehmung (42) gekoppelt sind.

7. Fahrzeugdach nach Anspruch 6, dadurch gekennzeichnet, daß der Zapfen (40) an dem Führungselement (32) und die Ausnehmung (42) an einem an dem Deckel (14) angebrachten Bauteil (38) ausgebildet sind.

8. Fahrzeugdach nach einem der Ansprüche 5 bis 7, dadurch gekennzeichnet, daß das Schwenklager (30) des Führungselements (32) in Verschieberichtung des Deckels (14) verschiebbar ist

9. Fahrzeugdach nach einem der Ansprüche 4 bis 8, dadurch gekennzeichnet, daß der Schwenkpunkt (30) des Führungselements (32) an einem Ende desselben liegt.

10. Fahrzeugdach nach Anspruch 9, dadurch gekennzeichnet, daß und sich an das angelenkte Ende des Führungselements (32) eine Führungsschiene (34) anschließt, die in Verschieberichtung des Deckels (14) in einer dachfesten Führung (36) verschiebbar ist.

11. Fahrzeugdach nach einem der Ansprüche 4 bis 10, dadurch gekennzeichnet, daß das Führungselement (32) als Kulisse mit Führungsschlitz (28) ausgebildet ist, in welchen ein an dem Himmelteil (16) ausgebildetes Gegenstück (Gleitschuh 26) eingreift.

12. Fahrzeugdach nach Anspruch 8, dadurch gekennzeichnet, daß der Deckel (14) aus der Schließstellung nach hinten unter die feste Dachhaut (10) verschiebbar ist und das Führungselement (32) so ausgebildet ist, das der Deckel bei dieser Verschiebung das Himmelteil (16) nach hinten mitnimmt.

13. Fahrzeugdach nach Anspruch 1 oder 2, dadurch gekennzeichnet, daß das Himmelteil (116) in ausgestelltem Zustand nicht verschiebbar ist, jedoch in nicht ausgestelltem Zustand unabhängig von der Deckelstellung verschiebbar ist.

14. Fahrzeugdach nach Anspruch 13, dadurch gekennzeichnet, daß der Deckel (14) und das Himmelteil (116) in dem bestimmten relativen Stellungsbereich mittels Gleiteingriff gekoppelt sind, wobei die Gleitrichtung im wesentlichen senkrecht zu der Ausstellrichtung steht.

15. Fahrzeugdach nach Anspruch 14, dadurch gekennzeichnet, daß an dem Deckel (14) ein Element (Zapfen 140) ausgebildet ist, der in eine an dem Himmelteil (116) ausgebildete Kulisse (164) eingreift.

16. Fahrzeugdach mit einem in seiner Schließstellung eine Dachöffnung (12) in einer festen Dachhaut (10) verschließenden Deckel (14), der zu Lüftungszwecken ausstellbar ist, sowie mit einem verstellbaren Himmelteil (116), das aus seiner Schließstellung, in welcher es die Sicht aus dem Fahrzeuginnenraum (18) auf den Deckel bzw. die Dachöffnung verdeckt, sowohl verschiebbar ist, um die Dachöffnung bzw. die Sicht auf den Deckel freizugeben, als auch mit dem Deckel ausstellbar ist, um die Lüftungsfünktion zu unterstützen, **dadurch gekennzeichnet**, daß das Himmelteil (116) derart mit dem Deckel (14) koppelbar ist, daß das Himmelteil, wenn es sich in einem bestimmten Stellungsbereich relativ zu dem Deckel befindet, beim Ausstellen des Deckels von diesem mitgenommen wird.

17. Fahrzeugdach nach Anspruch 16, dadurch gekennzeichnet, daß in gekoppeltem Zustand das Himmelteil (116) beim Ausstellen des Deckels (14) mitgenommen wird, wenn es sich in oder nahe der Schließstellung befindet

18. Fahrzeugdach nach Anspruch 16 oder 17, dadurch gekennzeichnet, daß die Koppelung manuell bewirkt bzw. gelöst wird.

19. Fahrzeugdach nach Anspruch 18, dadurch gekennzeichnet, daß die Koppelung über einen Verschluß (180) erfolgt, der bei Betätigung abwechselnd öffnet bzw. schließt.

20. Fahrzeugdach nach Anspruch 18, dadurch gekennzeichnet, daß die Koppelung dadurch erfolgt, daß Deckel (14) und Himmelteil (116) mittels eines Betätigungselements (170, 172) in Gleiteingriff gebracht werden, wobei die Gleitrichtung im wesentlichen senkrecht zu der Ausstellrichtung steht.

21. Fahrzeugdach nach Anspruch 20, dadurch gekennzeichnet, daß das Himmelteil (116) so gelagert ist, daß es sich bei Entkoppelung mit dem Deckel (14) in ausgestellter Position gedämpft absenkt.

22. Fahrzeugdach nach Anspruch 20 oder 21, dadurch gekennzeichnet, daß an dem Deckel (14) ein Element (Zapfen 140) ausgebildet ist, der in einen Kulissenschlitz (142) einer an dem Himmelteil (116) gelagerten Kulisse (164) eingreift, die mittels des Betätigungselements (170, 172) im wesentlichen in der Richtung des Kulissenschlitzes verschiebbar ist.

23. Fahrzeugdach nach Anspruch 22, dadurch gekennzeichnet, daß das Betätigungselement als Hebel (170) mit Gestänge (172) ausgebildet ist.

24. Fahrzeugdach nach einem der vorhergehenden Ansprüche, dadurch gekennzeichnet, daß das Himmelteil (16, 116) mit dem Deckel (14) verrastbar ist.

25. Fahrzeugdach nach Anspruch 24, dadurch gekennzeichnet, daß in der Schließstellung des Deckels (14) und des Himmelteils (16, 116) diese miteinander verrastet sind und die Verrastung beim Ausstellen des Deckels erhalten bleibt.

26. Fahrzeugdach nach Anspruch 24 oder 25, dadurch gekennzeichnet, daß die Verrastung zwischen Deckel (14) und Himmelteil (16, 116) durch Verschiebung des Himmelteils bezüglich des Deckels erfolgt bzw. gelöst wird.

27. Fahrzeugdach nach einem der vorhergehenden Ansprüche, dadurch gekennzeichnet, daß das Himmelteil (116) so ausgebildet ist, daß, wenn das Himmelteil beim Ausstellen des Deckels (14) mitgenommen wird, der hintere Teil bezüglich des vorderen Teils nach oben biegbar ist.

28. Fahrzeugdach nach einem der vorhergehenden Ansprüche, dadurch gekennzeichnet, daß der Deckel (14) aus der Schließstellung wahlweise ausstellbar oder nach hinten unter die feste Dachhaut (10) verschiebbar ist.
